# EUROPÄISCHE PATENTANMELDUNG

(11) **EP 2 211 589 A1**
(43) Veröffentlichungstag der Anmeldung: **28.07.2010**
(21) Anmeldenummer: 09290047.1
(22) Anmeldetag: 23.01.2009
(51) Int. Cl.: H05B 3/50, F24H 3/04

(54) **Wärmeübertrager**

(71) Anmelder: Behr GmbH & Co. KG, 70469 Stuttgart (DE); Behr France Rouffach SAS, 68250 Rouffach (FR)
(72) Erfinder: Kohl, Michael, 74321 Bietigheim (DE); Englert, Peter, 74177 Bad Friedrichshall (DE); Strauß, Thomas, 73274 Notzingen (DE); Lochmahr, Karl, 71665 Vaihingen/Enz (DE); Bauer, Marc, 68440 Habsheim (FR); Thierry, Clauss, 67400 Illkirch-Graffenstaden (FR)
(74) Vertreter: Grauel, Andreas

(57) **Zusammenfassung**

Ein Wärmeübertrager, umfassend wenigstens ein elektrisches Widerstandsheizelement (2), insbesondere PTC-Element (3), wenigstens zwei mit dem wenigstens einen elektrischen Widerstandsheizelement (2) elektrisch leitend verbundene Leiter (4), insbesondere Leiterplatten (6, 7), um elektrischen Strom durch das wenigstens eine elektrische Widerstandsheizelement (2) zu leiten und dadurch das elektrische Widerstandsheizelement (2) zu erwärmen, wenigstens ein Wärmeleitelement (11) zur Übertragung von Wärme von dem wenigstens einen elektrischen Widerstandsheizelement (2) auf ein zu erwärmendes Fluid, wenigstens ein elektrisches Isolierelement (22), welches das wenigstens eine Wärmeleitelement (11) elektrisch von den wenigstens zwei Leitern (4) isoliert, soll mit elektrischen Strom unter Hochspannung, z. B. mehr als 50 V, ohne Gefährdung für die Umwelt, insbesondere Menschen, betrieben werden können.
Diese Aufgabe wird dadurch gelöst, dass die wenigstens zwei Leiter (4) und/oder das wenigstens eine elektrische Widerstandsheizelement (2) in wenigstens einem von wenigstens einer Hohlraumwandung (17) begrenzten Hohlraum (19) angeordnet sind und das wenigstens eine elektrische Isolierelement (22) eine Vergussmasse (23) ist, welche den Hohlraum (19) dahingehend wenigstens teilweise ausfüllt, dass die wenigstens zwei Leiter (4) und/oder das wenigstens eine elektrische Widerstandsheizelement (2) elektrisch, vorzugsweise von der wenigstens einen Hohlraumwandung (17), wenigstens teilweise isoliert sind.

## Beschreibung

Die Erfindung betrifft einen Wärmeübertrager gemäß dem Oberbegriff des Anspruches 1, eine Kraftfahrzeugklimaanlage und ein Verfahren zur Herstellung eines Wärmeübertragers oder einer Kraftfahrzeugklimaanlage gemäß dem Oberbegriff des Anspruches 11.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst PTC-Elemente. PTC-Elemente (PTC: Positive Temperature Coefficient) sind Strom leitende Materialien, die einen elektrischen Widerstand aufweisen und bei tieferen Temperaturen den Strom besser leiten können als bei höheren Temperaturen. Ihr elektrischer Widerstand vergrößert sich somit bei steigender Temperatur. Das PTC-Element besteht im Allgemeinen aus Keramik und ist ein Kaltleiter. Dadurch stellt sich unabhängig von den Randbedingungen - wie z. B. angelegte Spannung, Nominalwiderstand oder Luftmenge an dem PTC-Element - eine sehr gleichmäßige Oberflächentemperatur am PTC-Element ein. Eine Überhitzung kann verhindert werden wie sie z. B. mit einem normalen Wärme abgebenden Heizdraht auftreten könnte, da hier unabhängig von den Randbedingungen immer ungefähr der gleiche Widerstand und dadurch eine im Wesentlichen identische elektrische Heizleistung aufgebracht wird.

Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird. In zunehmenden Maße werden Kraftfahrzeuge hergestellt, welche über einen ausschließlichen elektrischen Antrieb oder über einen Hybridantrieb verfügen. Kraftfahrzeugklimaanlagen für diese Kraftfahrzeuge verfügen im Allgemeinen nicht mehr über einen Wärmeaustauscher zum Erwärmen der Luft, der von Kühlflüssigkeit durchströmt wird. Die gesamte Heizleistung der Kraftfahrzeugklimaanlage muss deshalb von der elektrischen Heizeinrichtung bzw. den PTC-Elementen aufgebracht werden. Aus diesem Grund ist es erforderlich, die PTC-Elemente auch mit Hochspannung, z. B. im Bereich von 50 bis 600 Volt anstelle von Niederspannung mit 12 Volt, zu betreiben. Hochspannung in einer Kraftfahrzeugklimaanlage stellt jedoch ein Sicherheitsproblem dar, weil beispielsweise durch eine menschliche Berührung von unter Hochspannung stehenden Teilen dem Menschen von der Hochspannung gesundheitlicher Schaden zugefügt werden kann.

Die US 4 327 282 zeigt einen Wärmeübertrager mit einem PTC-Heizelement. Mittels Kontaktplatten wird Strom durch das PTC-Heizelement geleitet und an den Kontaktplatten ist eine Isolierschicht angeordnet. Die Komponenten werden mittels eines U-förmigen Clipses zusammengehalten.

Aus der EP 1 768 458 A1 ist ein Wärme erzeugendes Element einer Heizvorrichtung zur Lufterwärmung bekannt, umfassend wenigstens ein PTC-Element und an gegenüberliegenden Seitenflächen des PTC-Elementes anliegende elektrische Leiterbahnen, wobei die beiden elektrischen Leiterbahnen außenseitig von einer nicht elektrisch leitenden Isolierschicht umgeben sind.

Die Aufgabe der vorliegenden Erfindung besteht deshalb darin, einen Wärmeübertrager und eine Kraftfahrzeugklimaanlage sowie ein Verfahren zur Herstellung eines Wärmeübertragers und einer Kraftfahrzeugklimaanlage zur Verfügung zu stellen, bei dem ein mit elektrischen Strom unter Hochspannung, z. B. mehr als 50 V, betriebener Wärmeübertrager ohne Gefährdung für die Umwelt, insbesondere Menschen, betrieben werden kann. Der Wärmeübertrager und die Kraftfahrzeugklimaanlage sollen in der Herstellung preiswert sein zuverlässig im Betrieb arbeiten.

Diese Aufgabe wird gelöst mit einem Wärmeübertrager, umfassend wenigstens ein elektrisches Widerstandsheizelement, insbesondere PTC-Element, wenigstens zwei mit dem wenigstens einen elektrischen Widerstandsheizelement elektrisch leitend verbundene Leiter, insbesondere Leiterplatten, um elektrischen Strom durch das wenigstens eine elektrische Widerstandsheizelement zu leiten und dadurch das elektrische Widerstandsheizelement zu erwärmen, wenigstens ein Wärmeleitelement zur Übertragung von Wärme von dem wenigstens einen elektrischen Widerstandsheizelement auf ein zu erwärmendes Fluid, wenigstens ein elektrisches Isolierelement, welches die wenigstens zwei Leiter und/oder das wenigstens eine elektrische Widerstandsheizelement elektrisch isoliert, vorzugsweise von dem wenigstens einen Wärmeleitelement, wobei die wenigstens zwei Leiter und/oder das wenigstens eine elektrische Widerstandsheizelement in wenigstens einem von wenigstens einer Hohlraumwandung begrenzten Hohlraum angeordnet sind und das wenigstens eine elektrische Isolierelement eine Vergussmasse ist, welche den Hohlraum dahingehend wenigstens teilweise ausfüllt, dass die wenigstens zwei Leiter und/oder das wenigstens eine elektrische Widerstandsheizelement elektrisch, vorzugsweise von der wenigstens einen Hohlraumwandung, wenigstens teilweise isoliert sind.

Die wenigstens eine Hohlraumwandung ist beispielsweise ein Rohr, das im Querschnitt beispielsweise kreis- oder rechteckförmig oder oval ist, wobei ein unteres Ende des Rohres von einer Bodenhohlraumwandung verschlossen ist, so dass in den Hohlraum eine Flüssigkeit als Vergussmasse eingefüllt werden kann vom oberen offenen Ende des Rohres, ohne dass die Flüssigkeit aus dem von der Hohlraumwandung eingeschlossenen Hohlraum ausfließen kann. Der Hohlraum ist somit nach oben offen. Nach dem Einbringen der Vergussmasse und einer Heizeinhheit in den Hohlraum kann die Öffnung auch verschlossen werden.

In einer weiteren Ausgestaltung steht die Vergussmasse in unmittelbarem Kontakt zu der Hohlraumwandung und den wenigstens zwei Leitern sowie vorzugsweise auch in Kontakt mit dem wenigstens einen elektrischen Widerstandsheizelement, so dass die wenigstens zwei Leiter und vorzugsweise das wenigstens eine elektrische Widerstandsheizelement elektrisch von der Hohlraumwandung isoliert sind. Vorzugsweise stehen das wenigstens eine elektrische Widerstandsheizelement und/oder die wenigstens zwei Leiter nicht in unmittelbarem Kontakt zu der wenigstens einen Hohlraumwandung. Insbesondere bildet die wenigstens eine Hohlraumwandung ein nach oben offenes flüssigkeitsdichtes Gefäß.

Insbesondere ist die Vergussmasse eine Flüssigkeit, z. B. ein Gel oder eine Paste, oder eine erhärtbare oder eine erhärtete Flüssigkeit oder ein Öl, insbesondere Silikonöl, oder eine flüssige organische Verbindung oder ein Feststoff, z. B. ein Pulver oder ein Granulat.

In einer weiteren Ausgestaltung umfasst die Vergussmasse wärmeübertragende oder wärmeleitende Partikel, z. B. Siliziumkarbid und/oder Bornitrid. Vorzugsweise beträgt der Volumenanteil der wärmeübertragenden oder wärmeleitenden Partikel an der Vergussmasse 30 bis 90 % des Volumens der Vergussmasse.

Um den Wärmeübergang zwischen Vergussmasse und Hohlraumwandung noch weiter zu erhöhen, wird die Wandung, die mit der Vergussmasse in Kontakt steht, mit einer rauen Bornitridoberfläche versehen. Das Bornitrid wird hierbei in die Oberfläche der Wandung, die bevorzugt aus Aluminium besteht, eingebrannt, so dass der thermische Grenzflächenübergang zur Metalloberfläche weiter optimiert dargestellt werden kann.

Diese spezielle Beschichtung der Oberfläche wird während des Lötprozesses erzeugt. Hierzu wird dem Flussmittel, insbesondere auf Basis von Kalium-Aluminium, eine gewisse Menge an Bornitridpartikel zugesetzt, bevorzugt zwischen 2 und 20%.

Das Flussmittel schmilzt im Lötprozess auf und bildet die Basis für die Bornitridpartikel. Da das Flussmittel die Oxidschicht, insbesondere Aluminiumoxidschicht, der Oberfläche der Hohlraumwandung im schmelzflüssigen Zustand löst, werden die wärmeleitenden Bornitridpartikel beim Erkalten der Schmelze in die Aluminiumoberfläche eingebaut.

Es entsteht somit, anstelle des schlecht wärmeleitenden Aluminiumoxids, eine Mischphase aus Bornitrid, Aluminiumoxid und Kalium-AluminiumFluorid. Gleichzeitig kristallisiert das Flussmittel mit den Bornitridpartikeln auf der Oberfläche aus und bildet somit eine raue, gut wärmeleitende Bornitridoberfläche aus.

In einer ergänzenden Ausführungsform umfasst das wenigstens eine Wärmeleitelement die wenigstens eine Hohlraumwandung und/oder das wenigstens eine Wärmeleitelement umfasst Wellrippen, welche vorzugsweise außenseitig an der wenigstens einen Hohlraumwandung, insbesondere mittels Löten, angeordnet sind und/oder die wenigstens zwei Leiter weisen keinen unmittelbaren Kontakt zu der wenigstens einen Hohlraumwandung auf. Die Hohlraumwandung stellt somit ein Wärmeleitelement dar, das die Wärme von dem wenigstens einen elektrischen Widerstandsheizelement zu dem zu erwärmenden Fluid leitet. Die Wellrippen sind ebenfalls Wärmeleitelemente und dienen zur Vergrößerung der Oberfläche, mit der die Wärme auf das zu erwärmende Fluid übertragen werden kann.

Vorzugsweise ist der wenigstens eine Hohlraum flüssigkeitsdicht, so dass die Vergussmasse in den wenigstens einen Hohlraum einfüllbar ist, ohne dass Vergussmasse aus dem Hohlraum austreten kann. Ein flüssigkeitadichter Hohlraum hat den Vorteil, dass die Vergussmasse auch in einem flüssigen Aggregatzustand nicht aus dem Hohlraum austritt und dadurch einerseits beim Auffüllen des Hohlraumes im Allgemeinen keine Bereiche oder Räume ohne der Vergussmasse auftreten, sodass die elektrische Isolierung zuverlässig und sicher ist, z. B. auch bei höheren Temperaturen in der Vergussmasse ein Funkenüberschlag von den Leitern zu der Hohlraumwandung im Allgemeinen nicht möglich ist, weil keine Räume ohne Vergussmasse auftreten.

In einer Variante sind das wenigstens eine elektrische Widerstandsheizelement und die wenigstens zwei Leiter zu wenigstens einer Heizeinheit verbunden, welches oder welche in dem wenigstens einen Hohlraum angeordnet ist oder sind. Das Heizelement kann somit außerhalb des Rohres bzw. des Hohlraumes zunächst montiert werden und erst anschließend in den Hohlraum eingebracht werden. Vorzugsweise ist die wenigstens eine Heizeinheit zu wenigstens 50% in dem wenigstens einen Hohlraum angeordnet. Insbesondere ist in je einem Hohlraum nur eine Heizeinheit angeordnet.

Zweckmäßig weist die wenigstens eine Heizeinheit wenigstens einen, vorzugsweise leistenartigen, Abstandshalter auf, welcher die geometrische Ausrichtung der wenigstens einen Heizeinheit in dem wenigstens einen Hohlraum bedingt, so dass sich ein Teilhohlraum, z. B. ein Spalt, zwischen den wenigstens zwei Leitern und der wenigstens einen Hohlraumwandung ausbildet, welcher wenigstens teilweise mit der Vergussmasse ausgefüllt ist. Aufgrund des Teilhohlraumes zwischen den wenigstens zwei Leitern und der wenigstens einen Hohlraumwandung tritt kein unmittelbarer Kontakt zwischen den wenigstens zwei Leitern und der wenigstens einen Hohlraumwandung auf und die in dem Teilhohlraum angeordnete Vergussmasse isoliert die wenigstens zwei Leiter elektrisch von der wenigstens einen Hohlraumwandung, so dass die Hohlraumwandung kein elektrisches Potential aufweist. Vorzugsweise ist der Abstandshalter aus Kunststoff.

In einer weiteren Ausführungsform sind das wenigstens eine elektrische Widerstandsheizelement und die wenigstens zwei Leiter stoff- und/oder kraft-und/oder formschlüssig, z. B. mittels eines Klebers, insbesondere Silikonklebers, und/oder mittels einer Klammer, miteinander verbunden. Der Kleber hat die Aufgabe, die wenigstens zwei Leiter und das wenigstens eine elektrische Widerstandselement stoffschlüssig miteinander zu der Heizeinheit zu verbinden. Ferner hat der Kleber die Funktion, dass zwischen den beiden Leitern nur durch das wenigstens eine elektrische Widerstandsheizelement Strom fließt. Funkenüberschläge oder Kriechströme, die insbesondere aufgrund der hohen Spannungsdifferenz zwischen den beiden Leitern auftreten könnten, sollen dadurch verhindert werden.

Insbesondere ist der wenigstens eine Abstandshalter elektrisch isolierend und/oder der wenigstens eine Abstandshalter steht in unmittelbaren Kontakt zu der wenigstens einen Hohlraumwandung und/oder an die wenigstens eine Hohlraumwandung sind außenseitig Wellrippen als Wärmeleitelemente angelötet.

Erfindungsgemäße Kraftfahrzeugklimaanlage, wobei die Kraftfahrzeugklimaanlage wenigstens einen in dieser Anmeldung beschriebenen Wärmeübertrager umfasst.

Erfindungsgemäßes Verfahren zur Herstellung eines Wärmeübertragers oder einer Kraftfahrzeugklimaanlage, insbesondere eines oder einer in dieser Anmeldung beschriebenen Wärmeübertragers oder Kraftfahrzeugklimaanlage, mit den Schritten: zur Verfügung stellen wenigstens eines elektrischen Widerstandsheizelementes, insbesondere PTC-Elements, zur Verfügung stellen von wenigstens zwei elektrischen Leitern, insbesondere Leiterplatten, zum Durchleiten von elektrischen Strom durch das wenigstens eine elektrische Widerstandsheizelement, zur Verfügung stellen wenigstens eines Wärmeleitelements zur Übertragung von Wärme von dem wenigstens einen elektrischen Widerstandsheizelement auf ein zu erwärmende Fluid, zur Verfügung stellen wenigstens eines elektrischen Isolierelementes zum elektrischen Isolieren des wenigstens eine Wärmeleitelements von den wenigstens zwei Leitern, vorzugsweise mechanisches, Verbinden der wenigstens zwei Leiter mit dem wenigstens einen elektrischen Widerstandsheizelement, thermisches Verbinden des wenigstens einen Wärmeleitelementes mit dem wenigstens einen Leiter und/oder mit dem wenigstens einen elektrischen Widerstandsheizelement, elektrisches Isolieren der wenigstens zwei Leiter und/oder des wenigstens einen elektrischen Widerstandsheizelementes, vorzugsweise von dem wenigstens einen Wärmeleitelement, mittels des wenigstens einen elektrischen Isolierelementes, wobei das wenigstens eine Wärmeleitelement wenigstens eine Hohlraumwandung umfasst, welche oder welches wenigstens einen Hohlraum einschließt und in den wenigstens einen Hohlraum die wenigstens zwei Leiter und/oder das wenigstens eine elektrische Widerstandsheizelement angeordnet werden und das wenigstens eine elektrisches Isolierelement eine Vergussmasse ist, welche in den wenigstens einen Hohlraum eingebracht wird, so dass die wenigstens zwei Leiter und/oder das wenigstens eine elektrische Widerstandsheizelement elektrisch, vorzugsweise von der wenigstens einen Hohlraumwandung, isoliert sind.

In einer ergänzenden Variante werden die wenigstens zwei Leiter mit dem wenigstens einen elektrischen Widerstandsheizelement zu wenigstens einer Heizeinheit verbunden und anschließend wird die wenigstens eine Heizeinheit in den wenigstens einen Hohlraum eingebracht. Vorzugsweise wird das Verbinden mittels eines Klebers, insbesondere Silikonklebers, ausgeführt.

In einer weiteren Variante werden zusätzlich wenigstens ein, vorzugsweise leistenartiger, Abstandshalter mit den wenigstens zwei Leitern und dem wenigstens einen elektrischen Widerstandsheizelement zu der wenigstens einen Heizeinheit verbunden und der wenigstens eine Abstandshalter richtet nach dem Einbringen der Heizeinheit in den wenigstens einen Hohlraum die Heizeinheit geometrisch zu der wenigstens einen Hohlraumwandung aus, so dass sich ein Teilhohlraum, z. B. ein Spalt, zwischen der wenigstens einen Hohlraumwandung und den wenigstens zwei Leitern ausbildet, welcher mit der Vergussmasse wenigstens teilweise ausgefüllt wird. Die in dem Teilhohlraum angeordnete Vergussmasse isoliert somit die wenigstens zwei Leiter elektrisch von der wenigstens einen Hohlraumwandung.

In einer weiteren Ausgestaltung werden die wenigstens zwei Leiter mit dem wenigstens einen elektrischen Widerstandsheizelement und vorzugsweise mit dem wenigstens einen Abstandshalter stoff- und/oder form- und/oder kraftschlüssig zu wenigstens der wenigstens einen Heizeinheit verbunden, z. B mittels Kleben und/oder Umklammern.

Insbesondere ist die Vergussmasse eine erhärtbare Flüssigkeit welche nach dem Einbringen in den wenigstens einen Hohlraum erhärtet, z. B. zu einem Feststoff und/oder an die wenigstens eine Hohlraumwandung werden Wellrippen als Wärmeleitelemente angelötet.

In einer weiteren Ausgestaltung weist das wenigstens eine Wärmeleitelement und/oder die Vergussmasse und/oder der Kleber und/oder der Abstandshalter eine Wärmeleitfähigkeit von wenigstens 1 W/mK, insbesondere wenigstens 15 W/mK auf.

In einer weiteren Ausführungsform weist die Vergussmasse und/oder der Kleber und/oder der Abstandshalter eine elektrische Isolation von wenigstens 1 kV/mm, insbesondere wenigstens 25 kV/mm auf.

In einer Variante weist die Vergussmasse und/oder der Kleber und/oder der Abstandshalter, vorzugsweiese im Querschnitt, eine Durchschlagfestigkeit von wenigstens 1 kV auf.

In einer weiteren Ausgestaltung weist die Vergussmasse und/oder der Kleber und/oder der Abstandshalter eine Wärmeleitfähigkeit von wenigstens 1 W/mK, insbesondere wenigstens 15 W/mK auf. Die Vergussmasse und/oder der Kleber und/oder der Abstandshalter kann damit einerseits gut elektrisch isolieren und kann andererseits ausreichend gut die Wärme von dem elektrischen Widerstandsheizelement zu dem Wärmeleitelement oder den Wärmeleitelementen leiten.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine perspektivische Ansicht eines Wärmeübertragers,
- Fig. 3: eine perspektivische Ansicht eines Wärmeleitmodules des Wärmeübertragers gemäß Fig. 2,
- Fig. 4: eine perspektivische Ansicht einer Heizeinheit des Wärmeübertragers gemäß Fig. 2,
- Fig. 5: eine Explosionsdarstellung der Heizeinheit gemäß Fig. 4,
- Fig. 6: einen Querschnitt der Heizeinheit gemäß Fig. 4 in einem Rohr des Wärmeleitmodules gemäß Fig. 3 und
- Fig. 7: eine perspektivische Ansicht des Wärmeübertragers gemäß Fig. 2 in einem Gehäuse.

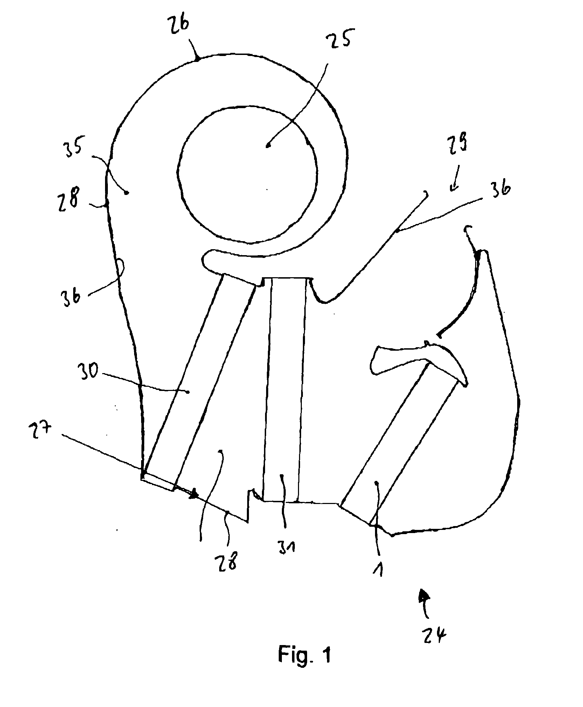

Fig. 1 zeigt eine Kraftfahrzeugklimaanlage 24. In einem Klimaanlagengehäuse 26 mit einer Bodenwandung 27 und einem Austrittsabschnitt 29 ist ein Gebläse 25, ein Filter 30, ein Kältemittelverdampfer 31 und ein Wärmeübertrager 1 als eine elektrische Heizeinrichtung angeordnet. Das Klimaanlagengehäuse 26 bildet somit einen Kanal 35 zum Durchleiten der Luft. Wandungen 28 des Klimaanlagengehäuses 26 weisen an der Innenseite eine Oberfläche 36 auf, welche den Kanal 35 begrenzen. Die Luft für den Innenraum eines Kraftfahrzeuges wird mittels des Gebläses 25 durch den Filter 30, den Kältemittelverdampfer 31 sowie den Wärmeübertrager 1 geleitet.

Die Kraftfahrzeugklimaanlage 24 ist somit nicht mit einem von Kühlmittel durchströmten Wärmeaustauscher versehen zum Erwärmen der durch die Kraftfahrzeuganlage 24 geleiteten Luft. Die durch die Kraftfahrzeugklimaanlage 24 geleitete Luft wird ausschließlich mittels des Wärmeübertrager 1 elektrisch erwärmt. Die Kraftfahrzeugklimaanlage 24 wird vorzugsweise in einem Kraftfahrzeug mit ausschließlich elektrischem Antrieb oder mit einem Hybridantrieb eingesetzt (nicht dargestellt). Um mittels des Wärmeübertragers 1 die notwendige elektrische Heizleistung zu erreichen, muss der Wärmeübertrager mit Hochspannung, z. B. mit mehr als 50 Volt, beispielsweise mit 60 V oder 600 V, betrieben werden, um keine zu großen Stromstärken und damit zu dicke Stromleitungen (nicht dargestellt) zu erhalten.

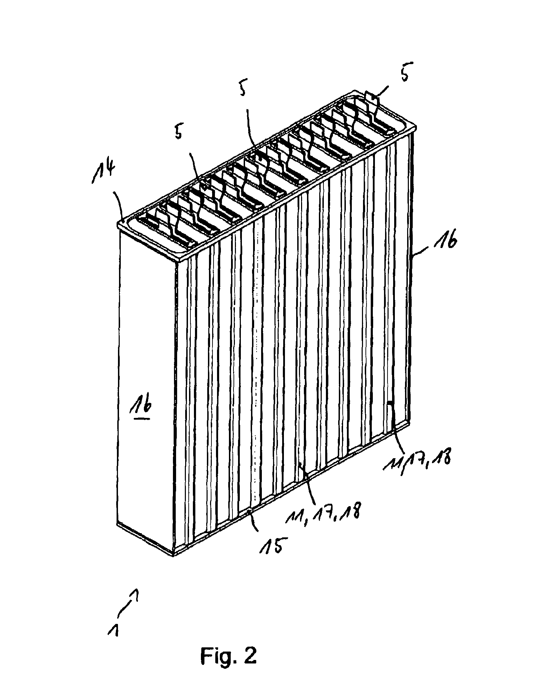

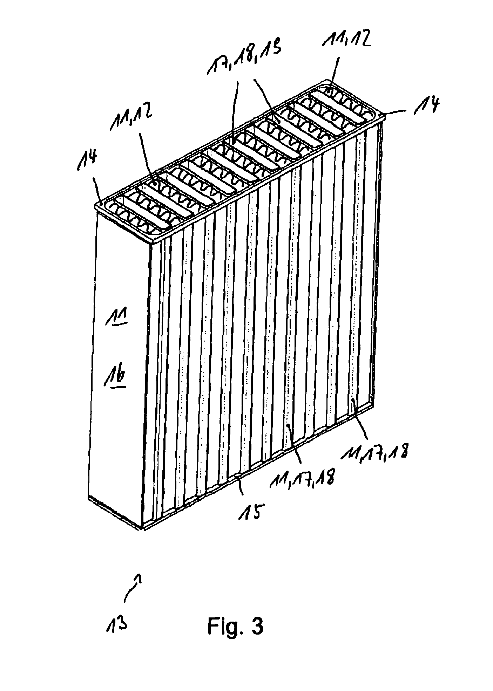

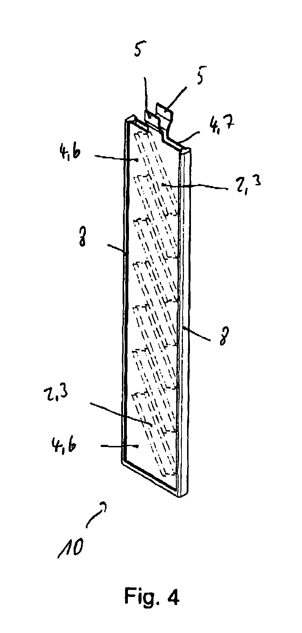

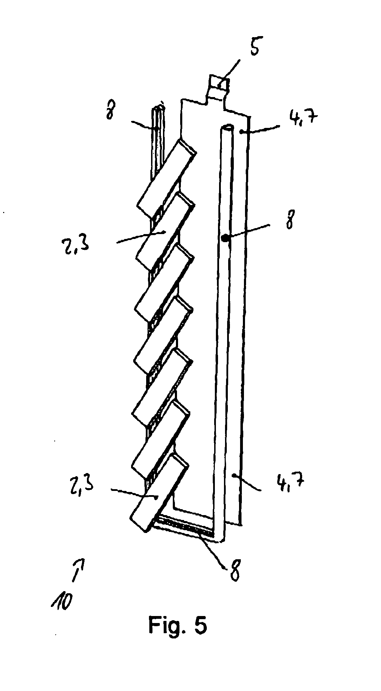

Fig. 2 zeigt den Wärmeübertrager 1. Der Wärmeübertrager 1 besteht aus einem Wärmeleitmodul 13 (Fig. 3) und mehreren Heizeinheiten 10 (Fig. 4, 5 und 6). Das Wärmeleitmodul 13 besteht wenigstens teilweise aus Metall, insbesondere Aluminium oder Stahl. Das Wärmeleitmodul 13 umfasst mehrere im Querschnitt rechteckförmige Rohre 18, die an der Oberseite gemäß Fig. 3 offen sind und an der Unterseite von einer Bodenwandung (nicht dargestellt) flüssigkeitsdicht verschlossen sind. Die Rohre 18 schließen somit bzw. begrenzen einen Hohlraum 19 ein, so dass der Hohlraum 19 von Hohlraumwandungen 17 begrenzt ist, die die Wandungen des Rohres 18 sowie die Bodenwandung des Rohres 18 darstellen. Zwischen den Rohren 18 sind Wellrippen 12 als Wärmeleitelemente 11 angeordnet. Die Wellrippen 12 haben die Aufgabe, die Oberfläche zu vergrößern, welche zur Verfügung steht, um ein zu erwärmendes Fluid erwärmen zu können. An dem Wärmeleitmodul 13 ist oberseitig ein Deckrahmen 14 und unterseitig ein Bodenrahmen 15 angeordnet. Ferner befindet sich seitlich jeweils eine Seitenwandung 16, welche ebenfalls ein Wärmleitelement 11 darstellt.

Die Wellrippen 12, die Rohre 18 und die Seitenwandungen 16 werden von dem Deckrahmen 14 und dem Bodenrahmen 15 zusammengehalten. Die Verbindung erfolgt vorzugsweise mittels Löten. Hierzu werden die Komponenten 12, 14, 15, 16, 18 in einen Lötofen eingebracht und dadurch die Komponenten 12, 14, 15, 16, 18 miteinander verlötet. Abweichend hiervon ist es auch möglich, dass andere Verbindungsverfahren oder -mittel eingesetzt werden, beispielsweise die Komponenten 12, 14, 15, 16, 18 des Wärmeleitmodules 13 miteinander verschweißt oder gefügt werden. Beim Verbinden mittels Löten treten große Kontaktbereiche zwischen den Wellrippen 12 und den Rohren 18 auf, so dass in vorteilhafter Weise ein hohes thermisches Leitvermögen zwischen den Rohren 18 und den Wellrippen 12 besteht. Die Breite des Wärmeleitmoduls 13 liegt beispielsweise im Bereich von 40 bis 400 mm und die Höhe des Wärmeleitmodules 13 liegt ebenfalls beispielsweise im Bereich von 40 bis 400 mm.

In dem von dem Rohr 18 bzw. den Hohlraumwandungen 17 eingeschlossenen Hohlraum 19 ist eine Heizeinheit 10 (Fig. 4 bis 6) angeordnet. Die Heizeinheiten 10 umfassen zwei als erste Leiterplatte 6 und als zweite Leiterplatte 7 ausgebildete Leiter 4, als PTC-Elemente 3 ausgebildete elektrische Widerstandsheizelemente 2 und einen U-förmigen Abstandshalter 8 aus Kunststoff. Die Leiter 4 bestehen wenigstens teilweise aus Metall, z. B. Aluminium oder Stahl. Am oberen Ende der beiden Leiterplatten 6, 7 ist jeweils eine elektrische Kontaktplatte 5 angeordnet. Die beiden elektrischen Kontaktplatten 5 dienen dazu, an diesen Kontaktplatten 5 eine elektrische Leitung (nicht dargestellt) anzubringen, um zwischen den beiden Leiterplatten 6, 7 eine elektrische Potentialdifferenz zu erhalten und somit durch die PTC-Elemente 3 elektrischen Strom leiten zu können.

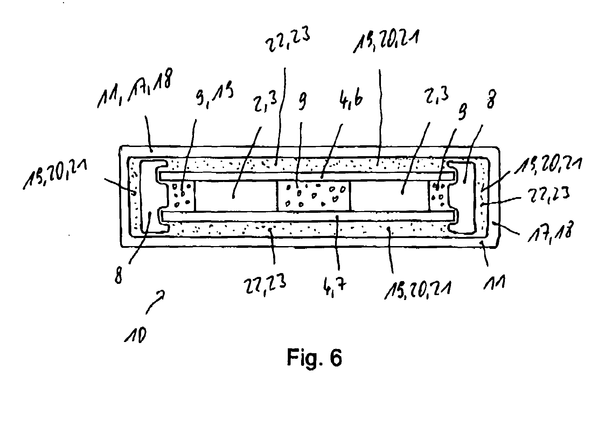

Die beiden Leiterplatten 6, 7, die PTC-Elemente 3 und der Abstandshalter 8 sind stoffschlüssig mit einem Kleber 9, insbesondere Silikonkleber, miteinander verbunden (Fig. 6). Der Kleber 9 ist dabei lediglich in den von den beiden Leiterplatten 6, 7 und dem Abstandshalter 8 eingeschlossenen Leerräumen vorhanden, nicht jedoch zwischen den PTC-Elementen 3 und den beiden Leiterplatten 6, 7. Die beiden Leiterplatten 6, 7 stehen in unmittelbarem Kontakt zu den PTC-Elementen 3. Der Kleber 9 hat neben der Aufgabe der stoffschlüssigen Verbindung außerdem die Funktion, dass die beiden Leiterplatten 6, 7 elektrisch voneinander isoliert werden, um aufgrund der vorhandenen großen Spannungsdifferenz zwischen den beiden Leiterplatten 6, 7 z. B. Spannungsüberschläge oder Kriechströme zu vermeiden. Der elektrische Strom, der von der ersten zur zweiten Leiterplatte 6, 7 geleitet wird, soll somit ausschließlich durch die PTC-Elemente 3 geleitet werden. Der leere Raum zwischen den beiden Leiterplatten 6, 7 wird von dem Kleber 9 vollständig ausgefüllt.

Nach der Herstellung der Wärmeleitmodule 13, d. h. der Montage und dem Löten im Lötofen, werden die vormontierten Heizeinheiten 10 in die Rohre 18 des Wärmeleitmodules 13 eingeschoben. In Fig. 2 ist das Wärmeleitmodul 13 mit den Heizeinheiten 10 abgebildet, die sich in dem von der Hohlraumwandung 17 bzw. dem Rohr 18 eingeschlossenen Hohlraum 19 befinden. Die Breite der im Querschnitt rechtförmigen Rohre 18 liegt im Bereich von 2 bis 15 mm. Ferner beträgt die Höhe der Wellrippen 12 ungefähr 2 bis 20 mm, d. h. der Abstand zwischen den Rohren 18 in dem Wärmeleitmodul 13 liegt ebenfalls im Beriech von 2 bis 20 mm.

Vor oder nach dem Einbringen der Heizeinheiten 10 in die flüssigkeitsdichten und nach unten geschlossenen Rohre 18 wird eine Vergussmasse 23 als elektrisches Isolierelement 22 in die Rohre 18 eingefüllt. Die Vergussmasse 23 ist ein Öl, das einerseits eine hohe thermische Wärmeleitfähigkeit aufweist und andererseits auch über eine große elektrische Isolation verfügt. Aufgrund der Geometrie des Abstandshalters 18 tritt kein unmittelbarer Kontakt zwischen den beiden Leiterplatten 6, 7 und der Hohlraumwandung 17 auf (Fig. 6). Zwischen den beiden Leiterplatten 6, 7 und der Hohlraumwandung 17 bzw. dem Rohr 18 tritt ein als Spalt 21 ausgebildeter Teilhohlraum 20 auf. In dem Teilhohlraum 20 ist die Vergussmasse 23 angeordnet. Aufgrund des flüssigen Aggregatzustandes der Vergussmasse 23 kann sich die Vergussmasse 23 vollständig in vorteilhafter Weise ohne Leerräume in dem Teilhohlraum 20 ausbreiten, so dass eine besonders sichere und zuverlässige elektrische Isolation der Hohlraumwandung 17 von den beiden Leiterplatten 6, 7 und den PTC-Elementen 3 gewährleistet ist. Die Dicke des Teilhohlraumes 20, d. h. des Spaltes 21, liegt beispielsweise im Bereich von 0,2 bis 3 mm. Die Dicke der beiden Leiterplatten 6, 7 beträgt beispielsweise 0,1 bis 2 mm und die Dicke der Heizeinheiten 10 liegt beispielsweise im Bereich von 0,6 bis 4 mm. Das vollständige Ausfüllen des Teilhohlraumes 20 bewirkt außerdem in vorteilhafter Weise, dass eine gute und hohe Wärmeleitung zwischen den PTC-Elementen 3 bzw. den beiden Leiterplatten 6, 7 und der Hohlraumwandung 17 auftritt. Die in den PTC-Elementen 3 frei werdende Wärme aufgrund des elektrischen Widerstandes der PTC-Elemente 3 wird somit insbesondere von den PTC-Elementen 3 auf die beiden Leiterplatten 6, 7, anschließend auf die Vergussmasse 23 und dann in die Hohlraumwandung 17 sowie in die Wellrippen 12 geleitet. In einem geringeren Umfang kann auch Wärme durch die Abstandshalter 8 geleitet werden. Die als Öl ausgebildete Vergussmasse 23 umfasst ferner wärmeleitende Partikel (nicht dargestellt), z. B. Siliziumkarbid und/oder Bornitrid, um das Wärmeleitvermögen der Vergussmasse 23 zusätzlich zu erhöhen.

Bevorzugt ist die Innenseite der Hohlraumwandung 17 aufgeraut, um die Wärmeübertragungsoberfläche an der Innenseite der Hohlraumwandungen 17 zu erhöhen, so dass die Wärmeleitfähigkeit erhöht wird. Dies kann beispielsweise mit einer mechanischen Aufrauung erfolgen oder auch mit einer Beschichtung. Die Beschichtung ist beispielsweise eine raue Bornitridoberfläche. Das Bornitrid wird vor dem Einbringen des Wärmeleitmodules 13 in den Lötofen auf die aus Aluminium bestehenden Rohre 18 innseitig aufgebracht und im Lötöfen wird das Bornitrid in das Aluminium der Rohre 18 eingebrannt.

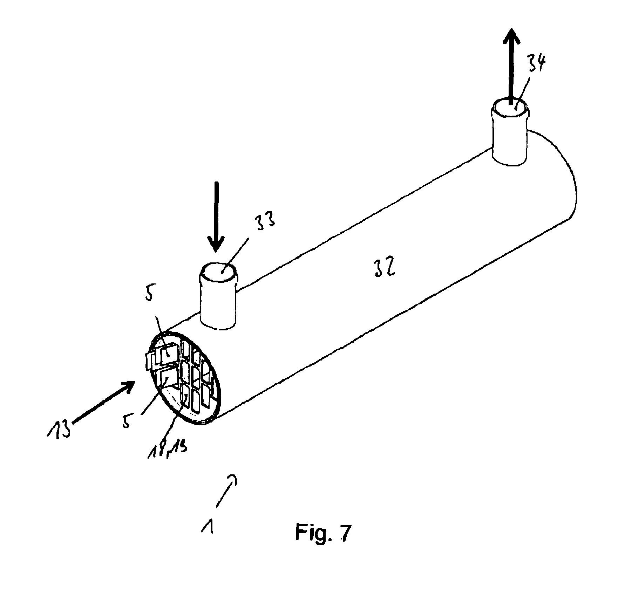

Der in Fig. 2 dargestellte Wärmeübertrager 1 dient zum Erwärmen eines Fluides, d. h. einer Flüssigkeit oder eines Gases. Bei einem Einsatz des Wärmeübertragers 1 in einer Kraftfahrzeugklimaanlage 24 gemäß Fig. 1 wird Luft von dem Wärmeübertrager 1 erwärmt. Zur Erwärmung einer Flüssigkeit mittels des Wärmeübertragers 1 ist der Wärmeübertrager 1 in einem Gehäuse 32 (Fig. 7) angeordnet. Das Gehäuse 32 ist mit einer Eintrittsöffnung 33 zum Einleiten eines Fluides, z. B. Wasser, und mit einer Austrittsöffnung 34 zum Ausleiten des Fluides versehen.

Als Vergussmasse 23 wird für einen Wärmeübertrager 1 zum Erwärmen einer Flüssigkeit bevorzugt eine Vergussmasse 23 eingesetzt, die eine erhärtbare Flüssigkeit ist. Nach dem Einbringen der Heizeinheiten 10 in die Rohre 18 wird die flüssige Vergussmasse 23 eingebracht, so dass gemäß der Darstellung in Fig. 6 die beiden Leiterplatten 6, 7 elektrisch von der Hohlraumwandung 17 isoliert sind. Die Vergussmasse 23, beispielsweise eine flüssige organische Verbindung, erhärtet nach einer bestimmten Zeit nach dem Einfüllen in den Hohlraum 19, so dass die Vergussmasse 23 ein Feststoff ist. Anschließend wird das Wärmeleitmodul 13 mit den Heizeinheiten 10, d. h. der Wärmeübertrager 1, in das Gehäuse 23 eingebracht. Aufgrund der Ausbildung der Vergussmasse 23 als erhärtete Flüssigkeit, d. h. als nicht von dem zu erwärmenden Fluid lösbarer Feststoff, kann die Vergussmasse 23 nicht von dem zu erwärmenden Fluid gelöst werden, welches durch die Ein-und Austrittsöffnung 33, 34 geleitet wird.

Eine in Fig. 7 nicht dargestellte Abdeckkappe verschließt das Gehäuse 32 dahingehend, dass die elektrischen Kontaktplatten 5 der Leiterplatten 6, 7 nicht in Kontakt zu der zu erwärmenden Flüssigkeit treten. Aus der Abdeckkappe stehen lediglich die elektrischen Kontaktplatten 5 heraus, wobei die Abdeckkappen das Gehäuse 32 und auch die Kontaktplatten 5 flüssigkeitsdicht abdichtet. Da die Vergussmasse 23 zunächst als Flüssigkeit in den Hohlraum 19 des Rohres 18 eingebracht wird, treten keine Leerräume in der Vergussmasse 23 auf und in vorteilhafter Weise sind die Leiterplatten 6, 7 flüssigkeitsdicht gegenüber der zu erwärmenden Flüssigkeit abgedichtet. Dadurch kann von den beiden Leiterplatten 6, 7 kein Strom auf die zu erwärmende Flüssigkeit und das Gehäuse 23 geleitet werden. Bevorzugt besteht das Gehäuse 32 und die nicht abgebildete Abdeckkappe aus Kunststoff und kann dadurch zusätzlich elektrisch isolierend wirken und ist außerdem damit in der Herstellung preiswert.

Insgesamt betrachtet sind mit dem erfindungsgemäßen Wärmeübertrager 1 und der erfindungsgemäßen Kraftfahrzeugklimaanlage 24 wesentliche Vorteile verbunden. Das PTC-Element 3 und die beiden Leiterplatten 6, 7 sind im Wesentlichen vollständig elektrisch gegenüber der Umgebung isoliert, so dass von der Hochspannung keine Gefahr für die Umgebung ausgehen kann.

## Patentansprüche

1. Wärmeübertrager (1), umfassend
- wenigstens ein elektrisches Widerstandsheizelement (2), insbesondere PTC-Element (3),
- wenigstens zwei mit dem wenigstens einen elektrischen Widerstandsheizelement (2) elektrisch leitend verbundene Leiter (4), insbesondere Leiterplatten (6, 7), um elektrischen Strom durch das wenigstens eine elektrische Widerstandsheizelement (2) zu leiten und **dadurch** das elektrische Widerstandsheizelement (2) zu erwärmen,
- wenigstens ein Wärmeleitelement (11) zur Übertragung von Wärme von dem wenigstens einen elektrischen Widerstandsheizelement (2) auf ein zu erwärmendes Fluid,
- wenigstens ein elektrisches Isolierelement (22), welches die wenigstens zwei Leiter (4) elektrisch isoliert, vorzugsweise von dem wenigstens einen Wärmeleitelement (11),
**dadurch gekennzeichnet, dass**
die wenigstens zwei Leiter (4) und/oder das wenigstens eine elektrische Widerstandsheizelement (2) in wenigstens einem von wenigstens einer Hohlraumwandung (17) begrenzten Hohlraum (19) angeordnet sind und das wenigstens eine elektrische Isolierelement (22) eine Vergussmasse (23) ist, welche den Hohlraum (19) dahingehend wenigstens teilweise ausfüllt, dass die wenigstens zwei Leiter (4) und/oder das wenigstens eine elektrische Widerstandsheizelement (2) elektrisch, vorzugsweise von der wenigstens einen Hohlraumwandung (17), wenigstens teilweise isoliert sind.

2. Wärmeübertrager nach Anspruch 1, **dadurch gekennzeichnet, dass** die Vergussmasse (23) eine Flüssigkeit, z. B. ein Gel oder eine Paste, ist oder eine erhärtbare oder eine erhärtete Flüssigkeit ist oder ein Öl, insbesondere Silikonöl, ist oder eine flüssige organische Verbindung ist oder ein Feststoff, z. B. ein Pulver oder ein Granulat, ist.

3. Wärmeübertrager nach Anspruch 1 oder 2, **dadurch gekennzeichnet, dass** die Vergussmasse (23) wärmeübertragende oder wärmeleitende Partikel, z. B. Siliziumkarbid und/oder Bornitrid, umfasst.

4. Wärmeübertrager nach einem oder mehreren der vorhergehenden Ansprüche, **dadurch gekennzeichnet, dass** das wenigstens eine Wärmeleitelement (11) die wenigstens eine Hohlraumwandung (17) umfasst und/oder das wenigstens eine Wärmeleitelement (11) Wellrippen (12) umfasst, welche außenseitig an der wenigstens einen Hohlraumwandung (17), insbesondere mittels Löten, angeordnet sind und/oder die wenigstens zwei Leiter (4) keinen unmittelbaren Kontakt zu der wenigstens einen Hohlraumwandung (17) aufweisen.

5. Wärmeübertrager nach einem oder mehreren der vorhergehenden Ansprüche, **dadurch gekennzeichnet, dass** der wenigstens eine Hohlraum (19) flüssigkeitsdicht ist, so dass die Vergussmasse (23) in den wenigstens einen Hohlraum (19) einfüllbar ist, ohne dass Vergussmasse (23) aus dem Hohlraum (19) austreten kann.

6. Wärmeübertrager nach einem oder mehreren der vorhergehenden Ansprüche, **dadurch gekennzeichnet, dass** das wenigstens eine elektrische Widerstandsheizelement (2) und die wenigstens zwei Leiter (4) zu wenigstens einer Heizeinheit (10) verbunden sind, welches oder welche in dem wenigstens einen Hohlraum (19) angeordnet ist oder sind.

7. Wärmeübertrager nach Anspruch 6, **dadurch gekennzeichnet, dass** die wenigstens eine Heizeinheit (10) wenigstens einen, vorzugsweise leistenartigen, Abstandshalter (8) aufweist, welcher die geometrische Ausrichtung der wenigstens einen Heizeinheit (10) in dem wenigstens einen Hohlraum (19) bedingt, so dass sich ein Teilhohlraum (20), z. B. ein Spalt (21), zwischen den wenigstens zwei Leitern (4) und der wenigstens einen Hohlraumwandung (17) ausbildet, welcher wenigstens teilweise mit der Vergussmasse (23) ausgefüllt ist.

8. Wärmeübertrager nach einem oder mehreren der vorhergehenden Ansprüchen, **dadurch gekennzeichnet, dass** das wenigstens eine elektrische Widerstandsheizelement (2) und die wenigstens zwei Leiter (4) stoff- und/oder kraft- und/oder formschlüssig, z. B. mittels eines Klebers (9), insbesondere Silikonklebers, und/oder mittels einer Klammer, miteinander verbunden sind.

9. Wärmeübertrager nach Anspruch 7 oder 8, **dadurch gekennzeichnet, dass** der wenigstens eine Abstandshalter (8) elektrisch isolierend ist und/oder der wenigstens eine Abstandshalter (8) in unmittelbaren Kontakt zu der wenigstens einen Hohlraumwandung (17) steht.

10. Kraftfahrzeugklimaanlage (24), **dadurch gekennzeichnet, dass** die Kraftfahrzeugklimaanlage (24) wenigstens einen Wärmeübertrager (1) gemäß einem oder mehrerer der vorhergehenden Ansprüche umfasst.

11. Verfahren zur Herstellung eines Wärmeübertragers (1) oder einer Kraftfahrzeugklimaanlage (24), insbesondere eines Wärmeübertragers (1) gemäß einem oder mehrerer der Ansprüche 1 bis 9 oder einer Kraftfahrzeugklimaanlage (24) gemäß Anspruch 10, mit den Schritten:
- zur Verfügung stellen wenigstens eines elektrischen Widerstandsheizelementes (2), insbesondere PTC-Elements (3),
- zur Verfügung stellen von wenigstens zwei elektrischen Leitern (4), insbesondere Leiterplatten (6, 7), zum Durchleiten von elektrischen Strom durch das wenigstens eine elektrische Widerstandsheizelement (2),
- zur Verfügung stellen wenigstens eines Wärmeleitelements (11) zur Übertragung von Wärme von dem wenigstens einen elektrischen Widerstandsheizelement (2) auf ein zu erwärmende Fluid,
- zur Verfügung stellen wenigstens eines elektrischen Isolierelementes (22) zum elektrischen Isolieren des wenigstens eine Wärmeleitelements (11) von den wenigstens zwei Leitern (4),
- Verbinden der wenigstens zwei Leiter (4) mit dem wenigstens einen elektrischen Widerstandsheizelement (2),
- thermisches Verbinden des wenigstens einen Wärmeleitelementes (11) mit dem wenigstens einen Leiter (4) und/oder mit dem wenigstens einen elektrischen Widerstandsheizelement (2),
- elektrisches Isolieren der wenigstens zwei Leiter (4), vorzugsweise von dem wenigstens einen Wärmeleitelement (11), mittels des wenigstens einen elektrischen Isolierelementes (22),
**dadurch gekennzeichnet, dass**
das wenigstens eine Wärmeleitelement (11) wenigstens eine Hohlraumwandung (17) umfasst, welche oder welches wenigstens einen Hohlraum (19) einschließt und in den wenigstens einen Hohlraum (19) die wenigstens zwei Leiter (4) und/oder das wenigstens eine elektrische Widerstandsheizelement (2) angeordnet werden und das wenigstens eine elektrisches Isolierelement (22) eine Vergussmasse (23) ist, welche in den wenigstens einen Hohlraum (19) eingebracht wird, so dass die wenigstens zwei Leiter (4) und/oder das wenigstens eine elektrische Widerstandsheizelement (2) elektrisch, vorzugsweise von der wenigstens einen Hohlraumwandung (17), isoliert sind.

12. Verfahren nach Anspruch 11, **dadurch gekennzeichnet, dass** die wenigstens zwei Leiter (4) mit dem wenigstens einen elektrischen Widerstandsheizelement (2) zu wenigstens einer Heizeinheit (10) verbunden werden und anschließend die wenigstens eine Heizeinheit (10) in den wenigstens einen Hohlraum (19) eingebracht wird.

13. Verfahren nach Anspruch 12, **dadurch gekennzeichnet, dass** zusätzlich wenigstens ein, vorzugsweise leistenartiger, Abstandshalter (8) mit den wenigstens zwei Leitern (4) und dem wenigstens einen elektrischen Widerstandsheizelement (2) zu der wenigstens einen Heizeinheit (10) verbunden werden und der wenigstens eine Abstandshalter (8) nach dem Einbringen der Heizeinheit (10) in den wenigstens einen Hohlraum (19) die Heizeinheit (10) geometrisch zu der wenigstens einen Hohlraumwandung (17) ausrichtet, so dass sich ein Teilhohlraum (20), z. B. ein Spalt (21), zwischen der wenigstens einen Hohlraumwandung (17) und den wenigstens zwei Leitern (4) ausbildet, welcher mit der Vergussmasse (23) wenigstens teilweise ausgefüllt wird.

14. Verfahren nach einem oder mehrerer der Ansprüche 11 bis 13, **dadurch gekennzeichnet, dass** die wenigstens zwei Leiter (4) mit dem wenigstens einen elektrischen Widerstandsheizelement (2) und vorzugsweise mit dem wenigstens einen Abstandshalter (8) stoff-und/oder form- und/oder kraftschlüssig zu wenigstens der wenigstens einen Heizeinheit (10) verbunden werden, z. B mittels Kleben und/oder Umklammern.

15. Verfahren nach einem oder mehreren der Ansprüche 11 bis 14, **dadurch gekennzeichnet, dass** die Vergussmasse (23) eine erhärtbare Flüssigkeit ist, welche nach dem Einbringen in den wenigstens einen Hohlraum (19) erhärtet, z. B. zu einem Feststoff und/oder an die wenigstens eine Hohlraumwandung (17) Wellrippen (12) als Wärmeleitelemente (11) angelötet werden.
